# NEUE EUROPÄISCHE PATENTSCHRIFT

(11) **EP 0 266 440 B2**
(45) Veröffentlichungstag und Bekanntmachung des Hinweises auf die Entscheidung über den Einspruch: **11.06.1997**
(45) Hinweis auf die Patenterteilung: 30.10.1991
(21) Anmeldenummer: 86115179.3
(22) Anmeldetag: 03.11.1986
(51) Int. Cl.: A01B 3/46

(54) **Drehpflug**
Reversible plough
Charrue réversible

(43) Veröffentlichungstag der Anmeldung: 11.05.1988
(73) Patentinhaber: Rabewerk GmbH + Co., 49152 Bad Essen (DE)
(72) Erfinder: Schröer, Fritz, Dipl.-Ing., D-4515 Bad Essen 1 (DE)
(74) Vertreter: Missling, Arne, Dipl.-Ing.

(56) Entgegenhaltungen:
- DE-A- 2 210 408
- DE-A- 2 545 009
- DE-B- 1 273 888
- FR-A- 2 174 983
- FR-A- 2 457 060
- FR-A- 2 486 760
- FR-A- 2 526 262
- FR-A- 2 605 831
- GB-A- 2 100 563
- GB-A- 2 124 462
- US-A- 3 771 607
- Übersichtsprospekt der Firma Ets Bugnot Sarl- 52350 Roches-Bettaincourt (FR), im Jahr 1984 auf der SIMA verteilt.

## Beschreibung

Die Erfindung betrifft einen Drehpflug nach dem Oberbegriff des Anspruches 1.

Aus der GB-Patentschrift 21 00 563 ist ein solcher Drehpflug bereits bekannt, bei dem ein etwa am Ende des Pflugrahmens angeordnetes Nachlaufrad mit einem Stabilisator verbunden ist. Weil das Nachlaufrad um eine senkrechte Schwenkachse frei beweglich ist und also einen vollen Schwenkkreis von 360° benötigt, muß einen verhältnismäßig großen seitlichen Abstand zu dem Pflugrahmen bzw. zu dessen Ende haben. Daher schwenkt der Drehpflug bei der Wendebewegung relativ hoch über das Nachlautrad hinweg, was beträchtliche Drehenergie erfordert. Beim Absenken des gewendeten Drehpfluges können harte Schläge auftreten. Auch sind die Fahreigenschaften, namentlich in engeren Kurven nicht besonders günstig.

Auch ein in der FR-PS 24 57 060 beschriebener Drehpflug hat eine weit hinten in größerem Abstand neben dem Pflugrahmen angeordnetes Nachlaufrad, so daß ähnliche Nachteile zu erwarten sind.

Weiterhin ist aus der DE-OS 25 45 009 ein Drehpflug bekannt, an dessen hinterem Pflugrahmen-Ende ein Pendelstützrad angelenkt ist. Dieses stellt sich während der Fahrt in Pflügrichtung; sein Nachlauf ist veränderlich, indem eine (Stell-)Achse verschieden geneigt wird. Kommt das Stützrad hinter das Ende des Pflugrahmens, so kann dadurch zwar dessen Aushubhöhe beim Wenden verringert werden, doch läßt sich der Pflugrahmen nicht verlängern und der Wenderadius wird größer.

Aus der FR-A-2 486 760 ist ein Drehpflug bekannt, bei dem das Stützrad von einem Stabilisator gehalten ist, wobei dieses gegenüber dem Stabilisator um eine lotrechte Achse verschwenkbar ist. Die Verschwenkung als solche wird über einen Lenker vorgenommen, der mittels eines Kugelgelenkes am Pflugrahmen angeordnet ist. Diese Lenkbarkeit des Stützrades bedingt einen relativ großen Abstand zum Pflugrahmen, so daß dieser hoch angehoben werden muß und somit eine hohe Drehenergie für das Wenden der Pflugkörper benötigt wird.

Aus der US-A-3 771 607 ist ein Drehpflug bekannt, bei dem die Pflugkörper um eine reelle Achse verschwenkt werden, wobei diese Achse durch ein Stützrad gegenüber dem Boden abgestützt ist. Das Stützrad ist unmittelbar mit dieser Achse verbunden, so daß beim Wenden der Pflugkörper der Pflugrahmen über die in der Höhe über dem Boden ortsfest gehaltene Schwenkachse hinweggeschwenkt werden muß. Insofern erfolgt hier auch keinerlei Verminderung der für den Wendevorgang erforderlichen Drehenergie.

Der Erfindung liegt die Aufgabe zugrunde, einen Drehpflug der eingangs genannten Art so auszubilden, daß das Stützrad sehr nahe seitlich neben dem Pflugrahmen anordbar ist und auf dem ungepflügten Boden läuft, der Drehpflug eine sehr gute Fahreigenschaft, insbesondere in Kurven mit engen Kurvenradien aufweist, der Pflugrahmen beim Wenden nur sehr wenig angehoben zu werden braucht und der Pflugrahmen in einfacher Weise ohne Behinderung durch das Stützrad verlängerbar ist.

Diese Aufgabe wird mit den Merkmalen des Anspruches 1 oder 2 gelöst.

Ein erfindungsgemäßer Drehpflug weist somit ein lotrechtes Gelenk zwischen dem Pflugvordergestell und dem Pflugrahmen auf, so daß der Pflugrahmen hierum verschwenkbar ist. Sofern der Drehpflug auch über den Oberlenker mit der Koppel verbunden ist, ist dem lotrechten Gelenk ein weiteres, horizontal liegendes Gelenk zugeordnet, damit die Bodenanpassung des Drehpfluges gewährleistet bleibt. Das von einem Stabilisator gehaltene Stützrad ist starr angeordnet, d.h. seine Laufrichtung ist parallel zur Pflügrichtung. Am Stützradträger des Stützrades oder am verlängerten Ende des Stabilisators ist eine Schwenkachse angeordnet, die im wesentlichen in Pflügrichtung liegend angeordnet ist. Um diese Schwenkachse ist eine Buchse verschwenkbar, an der ein mit dem Pflugrahmen verbundener Arm angreift. Da das Stützrad als starres Rad mit einer im wesentlichen fixen Anordnung zum Pflugrahmen ausgebildet ist, kann dieses sehr dicht neben dem Pflugrahmen angeordnet werden, wobei der Abstand des Pflugrahmens zur Schwenkachse gleichfalls sehr gering gehalten werden kann. Der Pflugrahmen wird beim Wenden der Pflugkörper über den Stabilisator verschwenkt und braucht, da der Abstand zum Stabilisator und zur ideellen Schwenkachse nur sehr gering zu sein braucht, somit nur wenig angehoben zu werden. Hierdurch wird die Drehenergie klein gehalten. Der das Stützrad stützende Stabilisator ist mit seinen beiden Enden am Pflugvordergestell wie auch am Stützradträger bzw. am verlängerten Ende der Schwenkachse über Gelenke angeschlossen, die je ein Kreuzgelenk bilden. Der Vorteil dieses Drehpfluges besteht weiterhin darin, daß durch die enge kompakte Anordnung des Stützrades neben dem Pflugrahmen der Pflugrahmen sehr kurz gebaut werden kann, so daß eine optimale Schleppkurve bei der Kurvenfahrt erhalten wird.

Weitere vorteilhafte Ausgestaltungen der Erfindung gehen aus den Unteransprüchen in Verbindung mit Zeichnung und Beschreibung hervor.

Zwei Ausführungsbeispiele der Erfindung sind im folgenden anhand der Zeichnung näher beschrieben, in dieser zeigen:
- Fig. 1: eine Draufsicht auf einen erfindungsgemäß ausgebildeten Drehpflug in Arbeitsstellung,

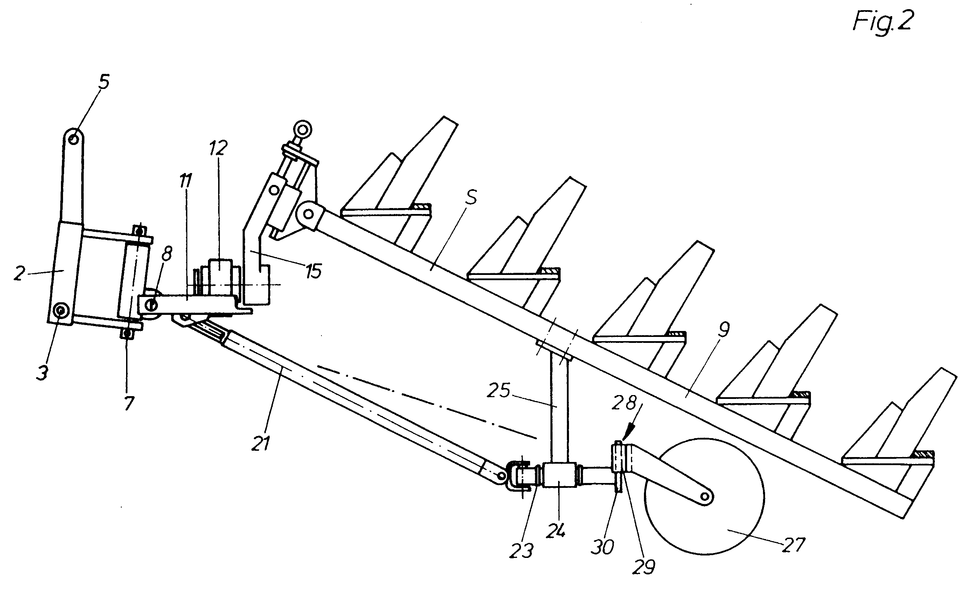

- Fig. 2: den gleichen Drehpflug in Seitenansicht in halb gedrehter Stellung,
- Fig. 3: eine weitere Ausführungsform eines Stützrades in Seitenansicht in der Arbeitsstellung,
- Fig. 4: eine Draufsicht auf das in Fig. 3 gezeigte und in Arbeitsstellung befindliche Stützrad,
- Fig. 5: eine Seitenansicht des Stützrades nach Fig. 4 in Transportstellung und
- Fig. 6: eine Seitenansicht einer weiteren Ausführungsform eines Stützrades in Transportstellung.

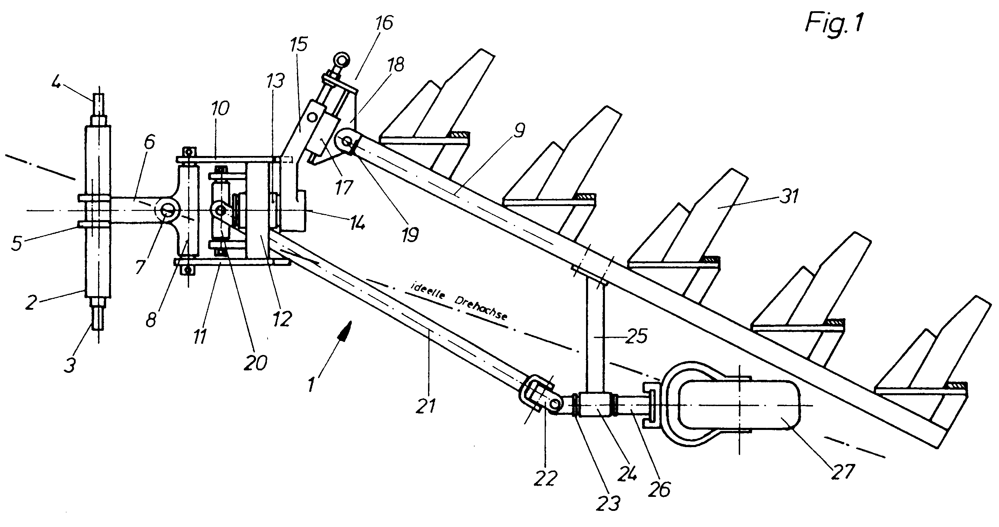

In Fig. 1 ist der erfindungsgemäße Drehpflug 1 dargestellt, der ein Pflugvordergestell 2 hat, mit Anschlußzapfen 3, 4 für die Unterlenker und einen Anschluß 5 für den Oberlenker eines Schleppers. An einem nach hinten weisenden Arm 6 des Pflugvordergestells ist eine lotrechte Achse 7 und eine horizontal liegende Achse 8 angeordnet, um die der Pflugrahmen 9 frei schwenkbar ist.

Mit der horizontal liegenden Achse 8 sind zwei Längsbalken 10, 11 verbunden, die durch einen Querbalken 12 miteinander verbunden sind. Am Querbalken 12 ist eine Lagerbuchse 13 für eine Drehachse 14 angeschlossen, auf der ein Arm 15 drehfest befestigt ist. Am Ende des Armes 15 ist eine Schnittbreitenverstellung 16 angeordnet, die aus einer Kulisse 17 sowie einem Kulissenstein 18 besteht, an dem der Pflugrahmen 9 über ein Gelenk 19 angeschlossen ist. Die Dreheinrichtung ist der Übersichtlichkeit halber weggelassen werden.

An dem Querbalken 12 ist des weiteren ein Kreuzgelenk 20 angeschlossen, an dem ein Stabilisator 21 angreift. Das hintere Ende des Stabilisators 21 ist über ein weiteres Kreuzgelenk 22 an eine Schwenkachse 23 angeschlossen, auf der eine Buchse 24 drehbar ist, mit der ein Arm 25 verbunden ist, dessen anderes Ende am Pflugrahmen 9 befestigt ist.

Starr mit der Schwenkachse 23 verbunden ist ein Stützradträger 26 eines Stützrades 27, der mit einer Aushebevorrichtung 28 versehen ist, die auch zur Tiefeneinstellung dienen kann, die im Ausführungsbeispiel als Kulisse 29 mit einem Kulissenstein 30 ausgebildet ist. Der Aushubzylinder ist der Übersichtlichkeit halber weggelassen werden.

Die Schwenkachse 23 ist, wie in Fig. 1 gezeigt, die die Arbeitsstellung des Drehpfluges 1 wiedergibt, in Arbeitsrichtung, d.h. im gleichen Sinn wie die Pflugkörper 31 ausgerichtet. Das Stützrad 27 ist als ungelenktes Rad ausgebildet, d.h. es kann so nahe am Pflugrahmen wie nur möglich angeordnet werden. Ein Schwenkbereich, wie dies bei einem Nachlaufrad benötigt wird, entfällt hier. Durch die sehr nahe Anordnung des Stützrades 27 am Pflugrahmen 9 wird der Abstand des Pflugrahmens 9 zur ideellen Drehachse sehr gering, so daß auch der Drehpflug 1 beim Wenden der Pflugkörper 31 nur wenig angehoben zu werden braucht. Des weiteren kann durch die Anordnung des Stützrades 27 neben dem Pflugrahmen 9 eine sehr kurze Bauweise des Drehpfluges 1 mit vorteilhaften Eigenschaften beim Fahren, insbesondere beim Fahren von Kurven, erhalten werden. Des weiteren ist das hintere Ende des Pflugrahmens 9 ohne weiteres durch Anbaustücke verlängerbar, ohne daß Änderungen am Stützrad 27 oder am Stabilisator 21 vorgenommen werden müssen. Diese geringe Aushubhöhe des Pflugrahmens 9 beim Wenden der Pflugkörper 31 ist durch die Anordnung des Stützrades 27 in Fahrtrichtung möglich und wird durch die Anordnung der Schwenkachse 23 in gleicher Richtung noch unterstützt.

Im Ausführungsbeispiel ist der Pflugrahmen 9 über eine lotrechte Achse 7 sowie eine horizontal liegende Achse 8 am Pflugvordergestell 2 angeschlossen. Die horizontal liegende Achse 8 kann eingespart werden, wenn der Drehpflug 1 nur an Unterlenkern angeschlossen ist und diese somit die horizontal liegende Achse 8 ersetzen.

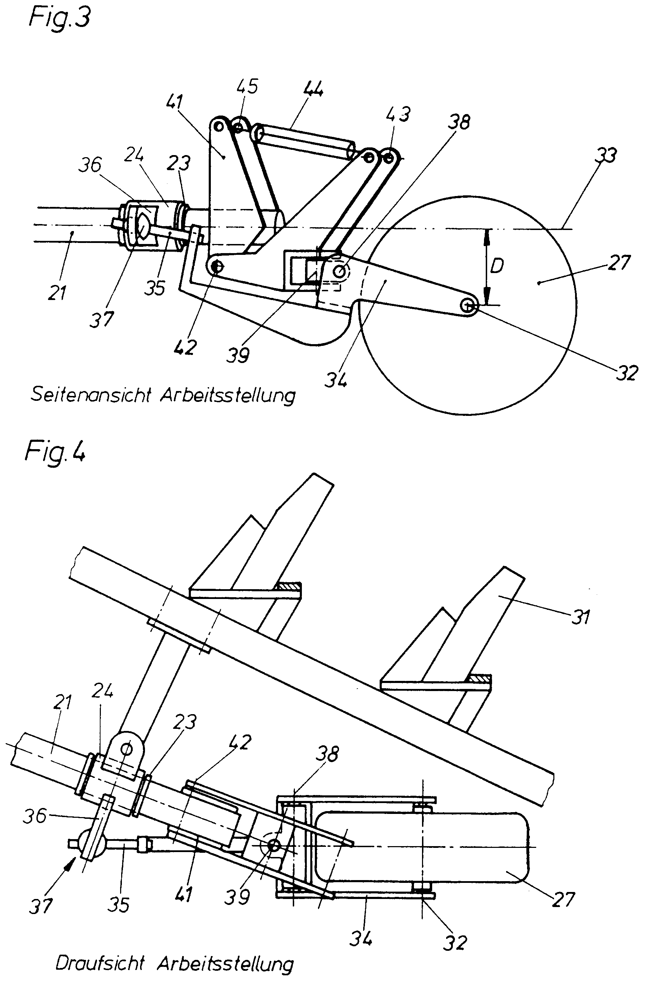

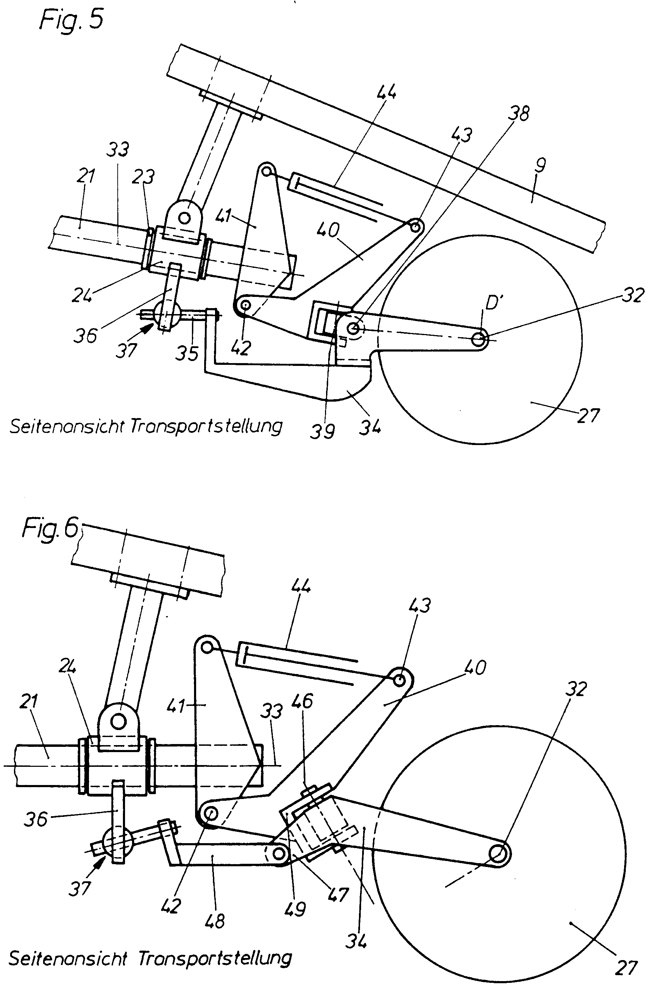

Bei dem in Fig. 3 gezeigten Ausführungsbeispiel sind gleiche Teile mit gleichen Bezugszeichen versehen. Der Unterschied zu dem Ausführungsbeispiel nach Fig. 1 besteht darin, daµ das Stützrad 27 mit einer Einrichtung versehen ist, mit der die Radachse 32 des Stützrades 27 relativ zum Stabilisator 21 und damit zur Schwenkachse 23 verändert werden kann, d.h. der Abstand D zwischen der Radachse 32 und der Verlängerung 33 der Schwenkachse 23 kann beim halbgedrehten Drehpflug 1, wie dies in Fig. 5 dargestellt ist, auf den Abstand D' verringert werden, wodurch gleichfalls die erforderliche Aushubhöhe des Pflugrahmens 9 beim Wenden der Pflugkörper 31 um den entsprechenden Betrag verringert wird. Gemäß dem Ausführungsbeispiel nach Fig. 3 ist der Stützradträger 34 als zweiarmiger Hebel ausgebildet, wobei das eine Ende des Stützradträgers mit der Radachse 32 verbunden ist, während das andere Ende 35 des Stützradträgers an einem Arm 36 angreift, der mit der Buchse 24 der Schwenkachse 23 verbunden ist. Die gelenkige Verbindung des Endes 35 des Stützradträgers 34 mit dem Arm 36 erfolgt über ein Universalgelenk 37. Der Stützradträger 34 ist an einer horizontal liegenden Achse 38 schwenkbar befestigt, die an einer senkrecht zu dieser angeordneten Achse 39 befestigt ist, wobei die Achsen 38 und 39 ein Kreuzgelenk bilden. Die Achse 39 ist in einem Hebel 40 gelagert, dessen eines Ende an einem mit dem Stabilisator 21 starr verbundenen Blech 41 in der Gelenkstelle 42 angreift, während am anderen Ende des Hebels 40 ein Hydraulikzylinder 44 mit seinem einen Ende in einer Gelenkstelle 43 angreift, der mit seinem anderen Ende am Blech 41 in der Gelenkstelle 45 angreift. Der Hydraulikzylinder 44 dient zum Ausheben des hinteren Endes des Pflugrahmens 9. Zur Tiefeneinstellung wird der Schwenkbereich des Hebels 40 um das Gelenk 42 mittels nicht dargestellter Anschläge eingestellt.

Für das Wenden der Pflugkörper wird zunächst das hintere Ende des Pflugrahmens 9 mit Hilfe des Hydraulikzylinders 44 ausgehoben und dann der Pflugrahmen 9 um die in Fig. 1 eingezeichnete ideelle Drehachse gedreht, die durch den Aufstützpunkt des Stützrades 27 am Boden und durch die lotrechte Achse 7 verläuft. Beim Drehen des Pflugrahmens 9 über den Stabilisator 21 wird gleichzeitig der Arm 36 zusammen mit der Buchse 24 verschwenkt, so daß der Stützradträger 34 um die Achse 38 verschwenkt wird, die ortsfest zum Stabilisator 21 angeordnet ist. Hierbei wird die Radachse 32 zur Verlängerung 33 der Schwenkachse 23 hin verschoben, so daß sich der Abstand von D auf D' verringert. Entsprechend verringert sich die notwendige Aushubhöhe des Pflugrahmens 9 beim Drehen.

Das Ausführungsbeispiel nach Fig. 6 unterscheidet sich von dem nach den Fig. 3 bis 5 im wesentlichen in der Ausbildung des Stützradträgers 34 und seiner Befestigung am Stabilisator 21. Der Stützradträger 34 ist um eine Achse 46 verschwenkbar, die zur Lotrechten geneigt ist. Am Ende 47 des Stützradträgers 34 ist ein Hebel 48 angelenkt, dessen anderes Ende über ein Universalgelenk 37 an einem Arm 36 angelenkt ist, der mit der Buchse 24 starr verbunden ist. Die Achse 46 wiederum ist in einem U-förmigen Bügel 49 gelagert, der mit dem Hebel 40 verbunden ist. Der Hebel 40 ist mit seinen beiden Gelenkstellen 42 und 43 am Blech 41 bzw. am Hydraulikzylinder 44 angelenkt, der wiederum mit seinem anderen Ende am Blech 41 angelenkt ist. Der Abstand der Verlängerung 33 des Stabilisators 21 zur Radachse 32 des Stützrades 27 wird bei diesem Ausführungsbeispiel durch die Schrägstellung der Achse 46 verringert. Stellt man sich bei Betrachtung der Fig. 6 eine Bewegung des Stützrades 27 um die Achse 46 aus der gezeigten Transportlage heraus vor, dann wird die Stabilisatorachse 33 gegenüber dem Stützrad 27 bzw. der Radachse 32 etwas angehoben. Die Mitte des Stützrades 27 beschreibt einen Teil eines Kreisbogens, wobei dieser Kreisbogen in einer zur Achse 46 senkrecht stehenden Ebene verläuft. Diese Ebene ist strichpunktiert angedeutet und steht zur Horizontalen schräg. Die Mitte des Stützrades 27 bewegt sich in dieser strichpunktierten Linie, in der Zeichnung gesehen, auf die Achse 46 zu, so daß der Rahmen relativ zur Radmitte gehoben wird. Dies ist beim Drehen aus der Arbeitsstellung heraus eine Absenkung. Die Radmitte bewegt sich infolge der geneigten Stellung der Achse 46 in einer zur Horizontalen geneigten Ebene, wodurch sich der Stabilisator 21 mit dem Pflugrahmen 9 mit Beginn des Drehens absenkt und sich anschließend wieder anhebt.

## Patentansprüche

1. Drehpflug (1) mit einem Pflugvordergestell (2), das Anlenkstellen (3, 4, 5) für Lenker eines Schleppers hat,
und mit einem vom einem Stabilisator (21) gehaltenen Stützradträger (26; 34),
wobei der Stützradträger mit einer Schwenkachse (23) versehen ist,
welche Schwenkachse (23) - im wesentlichen in Pflügrichtung verlaufend - mit dem Stabilisator (21) über ein Kreuzgelenk (22) verbunden ist,
wobei das Kreuzgelenk (22) zwischen Schwenkachse (23) und Stabilisator (21) angeordnet ist, und
an der Buchse (24) der Schwenkachse ein mit einem Pflugrahmen (9) verbundener Arm (25) angreift, wobei
das Pflugvordergestell eine lotrechte Achse (7) für einen mittels einer Wendeeinrichtung frei schwenkbaren Pflugrahmen aufweist,
und das Stützrad ungelenkt
und unmittelbar neben dem Pflugrahmen mit der parallel zu den Pflugkörpern und damit zur Pflügrichtung verlaufenden Schwenkachse
so angeordnet ist, daß es zum Verlassen der Arbeitsstellung zusammen mit dem Pflugrahmen (9) zwangsläufig gleichsinnig um dessen ideelle Drehachse verschwenkbar ist, und
die Schwenkachse starr mit dem Stützradträger (26) des Stützrades verbunden ist.

2. Drehpflug (1) mit einem Pflugvordergestell (2), das Anlenkstellen (3, 4, 5) für Lenker eines Schleppers hat,
und mit einem vom einem Stabilisator (21) gehaltenen Stützradträger (26; 34),
wobei der Stabilisator (21) mit einer Schwenkachse (23) versehen ist,
welche Schwenkachse (23) - im wesentlichen in Pflügrichtung verlaufend - mit dem Stützradträger (26) über ein Kreuzgelenk (38, 39) verbunden ist,
wobei das Kreuzgelenk (38, 39) zwischen Schwenkachse (23) und Stützradträger (34) angeordnet ist, und
an der Buchse (24) der Schwenkachse (23) ein mit einem Pflugrahmen (9) verbundener Arm (25) angreift, wobei
das Pflugvordergestell eine lotrechte Achse (7) für einen mittels einer Wendeeinrichtung frei schwenkbaren Pflugrahmen aufweist,
und das Stützrad ungelenkt
und unmittelbar neben dem Pflugrahmen mit der parallel zu dem Stabilisator verlaufenden Schwenkachse
so angeordnet ist, daß es zum Verlassen der Arbeitsstellung zusammen mit dem Pflugrahmen (9) zwangsläufig gleichsinnig um dessen ideelle Drehachse verschwenkbar ist, und
die Buchse (24) der Schwenkachse kinematisch zwangsläufig mit dem Stützradträger (34) des Stützrades verbunden ist.

3. Drehpflug (1) nach Anspruch 1, dadurch gekennzeichnet, daß der Stabilisator (21) in an sich bekannter Weise über je ein Kreuzgelenk (20, 22) mit dem Pflugvordergestell (2) bzw. der Schwenkachse (23) verbunden ist.

4. Drehpflug (1) nach einem der Ansprüche 1 bis 3, dadurch gekennzeichnet, daß die lotrechte Achse (7) für die Drehbewegung des Pflugrahmens (9) und eine ihr zugeordnete horizontale Achse (8) zusammen ein Kreuzgelenk bilden.

5. Drehpflug (1) nach Anspruch 2 oder 4, dadurch gekennzeichnet, daß der Stützradträger (34) als Doppelhebel ausgebildet und um eine in Arbeitsstellung im wesentlichen horizontal liegende Achse (38) schwenkbar mit der Schwenkachse (23) verbunden ist, wobei der horizontal liegenden Achse (38) eine senkrecht zu ihr verlaufende Achse (39) zugeordnet ist und beide Achsen (38, 39) ein Kreuzgelenk bilden, daß die senkrecht verlaufende Achse (39) schwenkbar an einem Hebel (40) befestigt ist, der mit seinem einen Ende gelenkig am Stabilisator (21) und mit seinem anderen Ende an einem Hydraulikzylinder (44) angelenkt ist, welcher seinerseits mit einem Ende am Stabilisator (21) angreift und daß das Ende (35) des Stützradträgers (34) über ein Kreuzgelenk (37) mit der Buchse (24) der Schwenkachse (23) verbunden ist.

6. Drehpflug nach Anspruch 5, dadurch gekennzeichnet, daß an der Buchse (24) ein mit dem Kreuzgelenk (37) verbundener Arm (36) angeordnet ist.

## Claims

1. Rotary plough (1) having a plough front frame (2) which comprises coupling points (3, 4, 5) for connecting rods of a tractor and having a support wheel carrier (26; 34) which is held by a stabiliser (21), wherein the support wheel carrier is provided with a pivot shaft (23), which pivot shaft (23) - extending substantially in the ploughing direction - is connected to the stabiliser (21) by way of a universal joint (22), wherein the universal joint (22) is disposed between the pivot shaft (23) and the stabiliser (21), and an arm (25) connected to a plough frame (9) engages the sleeve (24) of the pivot shaft, wherein the plough front frame comprises a vertical axis (7) for a plough frame which is freely swivellable by means of a turning device, and the support wheel is disposed non-articulated and immediately adjacent to the plough frame with the pivot shaft extending parallel with the plough elements and thus with the ploughing direction such that in order to abandon the working position the said support wheel can be swivelled together with the plough frame (9) positively and in the same direction about its imaginary axis of rotation and the pivot shaft is rigidly connected to the support wheel carrier (26) of the support wheel.

2. Rotary plough (1) having a plough front frame (2) which comprises coupling points (3, 4, 5) for connecting rods of a tractor and having a support wheel carrier (26; 34) which is held by a stabiliser (21), wherein the stabiliser (21) is provided with a pivot shaft (23), which pivot shaft (23) - extending substantially in the ploughing direction - is connected to the support wheel carrier (26) by way of a universal joint (38, 39), wherein the universal joint (38, 39) is disposed between the pivot shaft (23) and the support wheel carrier (34) and an arm (25) connected to a plough frame (9) engages the sleeve (24) of the pivot shaft (23), wherein the plough front frame comprises a vertical axis (7) for a plough frame which is freely swivellable by means of a turning device, and the support wheel is disposed non-articulated and immediately adjacent to the plough frame with the pivot shaft extending parallel with the stabiliser such that in order to abandon the working position the said support wheel can be swivelled together with the plough frame (9) positively and in the same direction about its imaginary axis of rotation and the sleeve (24) of the pivot shaft is kinematically positively connected to the support wheel carrier (34) of the support wheel.

3. Rotary plough (1) according to claim 1 characterised in that the stabiliser (21) is connected in a manner known per se by way of a universal joint (20, 22) respectively to the plough front frame (2) and the pivot shaft (23).

4. Rotary plough (1) according to any one of claims 1 to 3, characterised in that the vertical shaft (7) for the rotational movement of the plough frame (9) and a horizontal shaft (8) associated therewith form together a universal joint.

5. Rotary plough (1) according to claim 2 or 4, characterised in that the support wheel carrier (34) is formed as a double lever and is connected in a swivellable manner to the pivot shaft (23) about a shaft (38) lying substantially horizontally in the working position, wherein to the horizontally lying shaft (38) is allocated a shaft (39) which extends in a perpendicular manner thereto and the two shafts (38, 39) form a universal joint, that the shaft (39), which extends in a perpendicular manner, is fixed in a swivellable manner to a lever (40) which with its one end is connected in an articulated manner to the stabiliser (21) and with its other end is articulated to a hydraulic cylinder (44), which in turn with its one end acts upon the stabiliser (21), and that the end (35) of the support wheel carrier (34) is connected by way of a universal joint (37) to the sleeve (24) of the pivot shaft (23).

6. Rotary plough according to claim 5, characterised in that an arm (36), which is connected to the universal joint (37), is disposed on the sleeve (24).

## Revendications

1. Charrue réversible (1) comportant une sellette avant de charrue (2), possédant des points d'attelage (3, 4, 5) pour la barre d'attelage d'un tracteur, et un support d'une roue d'appui (26, 34) maintenu par un stabilisateur (21), ce support de roue d'appui étant équipé d'un axe de pivotement (23) qui - dirigé essentiellement suivant la direction de la charrue - est relié avec le stabilisateur (21) par une articulation à la cardan (22) disposée entre l'axe de pivotement (23) et le stabilisateur (21), un bras (25) relié au cadre de la charrue (9) venant se prendre sur la douille (24) de l'axe de pivotement,
la sellette avant de charrue (2) présentant un axe vertical (7) pour un cadre de charrue (9) qu'on peut faire pivoter librement au moyen d'un dispositif d'orientation,
et la roue d'appui (27) étant disposée sans articulation et directement à côté du cadre de charrue (9) avec un axe de pivotement (23) parallèle aux corps de charrue (31) et, de ce fait, parallèle à la direction du labour, de telle façon que, pour quitter la position de travail, la roue soit contrainte de basculer ensemble avec le cadre de charrue (9) dans le même sens autour de l'axe virtuel de pivotement de ce dernier,
et l'axe de pivotement (23) étant raccordé rigidement, avec le support (26) de la roue d'appui (27).

2. Charrue réversible (1) comportant une sellette avant de charrue (2), possédant des points d'attelage (3, 4, 5) pour la barre d'attelage d'un tracteur, et un support d'une roue d'appui (26, 34) maintenu par un stabilisateur (21), ce stabilisateur (21) étant équipé d'un axe de pivotement (23) qui - dirigé essentiellement suivant la direction de la charrue - est relié avec le support de roue d'appui (26) par une articulation au cardan (22) disposée entre l'axe de pivotement (23) et le support de roue d'appui (34), un bras (25) relié au cadre de la charrue (9) venant se prendre sur la douille (24) de l'axe de pivotement,
la sellette avant de charrue (2) présentant un axe vertical (7) pour un cadre de charrue (9) qu'on peut faire pivoter librement au moyen d'un dispositif d'orientation,
et la roue d'appui (27) étant disposée sans articulation et directement à côté du cadre de charrue (9) avec un axe de pivotement (23) parallèle aux corps de charrue (31) et, de ce fait, parallèle au stabilisateur (21), de telle façon que, pour quitter la position de travail, la roue soit contrainte de basculer ensemble avec le cadre de charrue (9) dans le même sens autour de l'axe virtuel de pivotement de ce dernier,
et la douille de l'axe de pivotement (23) étant raccordé avec une liaison cinématique obligée, avec le support (26) de la roue d'appui (27).

3. Charrue réversible (1) suivant la revendication 1, caractérisée en ce que le stabilisateur (21) est raccordé, d'une manière connue en elle-même, chaque fois par l'intermédiaire d'un joint de cardan (20, 22) respectivement avec la sellette avant de charrue (2), et avec l'axe de pivotement (23).

4. Charrue réversible suivant l'une quelconque des revendications 1 à 3, caractérisée en ce que l'axe vertical (7) pour le mouvement de rotation du cadre de charrue (9) et un axe horizontal (8), qui lui est associé, forment ensemble une articulation à la cardan.

5. Charrue réversible (1) suivant la revendication 2 ou 4, caractérisée en ce que le support de roue d'appui (34) est réalisé sous la forme d'un double levier et est raccordé à l'axe de pivotement (23) de façon à pouvoir pivoter autour d'un axe (38) disposé horizontalement en position de travail essentiellement, alors qu'un axe (39), perpendiculaire à l'axe disposé horizontalement (38), est associé à ce dernier et que les deux axes (38, 39) forment une articulation à la cardan,
en ce que l'axe perpendiculaire (39) est fixé, de façon à pouvoir pivoter, sur un levier (40) relié avec articulation, à l'une de ses extrémités, avec le stabilisateur (21) et, à son autre extrémité, avec un vérin hydraulique (44) qui, de son côté agit à une extrémité sur le stabilisateur (21),
et en ce que l'extrémité (35) du support de roue d'appui (34) est reliée, par l'intermédiaire d'une articulation à la cardan (37) avec la douille (24) de l'axe de pivotement (23).

6. Charrue réversible suivant la revendication 5, caractérisée en ce que, sur la douille (24), est disposé un bras (36) relié au joint de cardan (37).
